# EUROPEAN PATENT SPECIFICATION

(11) **EP 0 666 285 B1**
(45) Date of publication and mention of the grant of the patent: **17.05.2000**
(21) Application number: 94101580.2
(22) Date of filing: 02.02.1994
(51) Int. Cl.: C08L 67/02, C08J 11/06

(54) **A PET packaging material**
PET Verpackungsmaterial
Matériau d'emballage de PET

(43) Date of publication of application: 09.08.1995
(73) Proprietor: EUROPEAN ECONOMIC COMMUNITY E.E.C., 2920 Luxembourg (LU)
(72) Inventor: Strassinopoulos, Alexis, N. Smyrni 171,23 (GR); Tsiourvas, Demitrios, Vrilissia (GR); Tsartolia, Eugenia, P. Faliron 17562 (GR); Lambert, Jean-Claude, B-4000 Liège (BE); Barrell, Moira, Congleton, Cheshire CWIZ 4JQ (GB); Kalfoglou, Nikos, 264 41 Patras (GR); Haveaux, Bernard, B-1400 Nivelles (BE)
(74) Representative: Weinmiller, Jürgen

(56) References cited:
- EP-A- 0 141 016
- EP-A- 0 332 772
- EP-A- 0 422 282
- EP-A- 0 481 471
- EP-A- 0 533 304
- WO-A-91/19767
- US-A- 4 485 204

## Description

The present invention relates to a packaging material utilizing polyethylene terephthalate (PET) as main constituent for use in producing hollow containers through reaction extrusion blending.

Poly(ethylene terephthalate) - PET is widely used for producing containers for beverages, water, vegetable oils and solvent containing products (such as agrochemicals). More than 1.5 mi tons of PET are used for these applications every year.

These containers are produced using the injection stretch blow moulding method. Normal PET cannot be processed by extrusion blow moulding because of its low strength which does not permit the formation of a stable parison. Only special high intrinsic viscosity PET grades (extrusion blow moulding - EBM - grades) can be used for such a process. Nevertheless the cost of such grades is high, they have processing limitations and the performance of thus produced (unstretched) bottles is similar to those produced by PVC regarding permeability and drop test performance.

Extrusion blow moulding is the dominating technique for producing containers and other hollow bodies (eg. car tanks) from polyolefins and PVC. Over 25,000 processing units are spread over Europe only. For that reason it would be highly desirable if PET could be processed in these widespread processing units like the other commodity blow mouldable materials. This would be especially important for the recycled PET which cannot be used for making beverages bottles.

If the rheological properties of the recovered bottle grade PET were improved, it could be processed by extrusion blow moulding, replacing polyolefins and other commodity materials.

The first early efforts to blend PET with polyolefins are reported by Epstein who produced blends of PET with ethylvinylacetate copolymer (EVA) grafted with glycidyl methacrylate (GMA) (US patent 4,172,859). Similar work is reported for PET by Mashita (Japanese patent 61060744 A2). Blends of poly(butylene terephthalate), PBT, with ethylene-propylene-diene modified copolymer (EPDM) grafted with GMA are reported by Oliver (US patent 4,594,386) and Pratt (WO 88/07065).

Blends of PET with epoxide-functionalized EPDM are reported by Phadke (EP-A-279,502). Richeson reports thermally stable blends made of PET, LDPE and heat stabilizer (DE-A-36 07 412). PET, PE, calcium oxide and rubbery block copolymers give also blends which do not need any predrying (US patent 4,485,204).

Blends of PET, polypropylene and maleated ethylene-propylene copolymer were reported by Crook (WO 91/08263). Wefer reports on impact-resistant polyethylene terephthalate-polycarbonate-polyethylene blends containing grafted rubber modifier (EP-A-322 095). Finally, La Mantia reports blends of polyolefins of LDPE and HDPE with PET with (Lombardo, G; La Mantia F.P., Mater.Eng. (Modena) 3(1), 91-14(1991)) or without the addition of rubbers and compatibilizers (La Mantia, F.P., Polym.Degrad.Stab. 37(2), 145-8 (1992)).

Aharoni has studied chain extension of PET through coextrusion with tertiary phosphite condensing agents (US patent 4,568,720). Inata describes the increase of the viscosity of PET when coextruded with 2,2-bis(2-oxazoline) (US patent 4,269,947).

Chain extension of PET with polyisocyanates is reported by several authors (US patents 3,533,157; 4,409,167; 4,542,177). PET chain extension by coextrusion with polycarbodiimides (US patent 4,110,302) or polyphthalimides (US patent 4,017,463) has also been reported. Thermoplastic blow mouldable compositions made of branched PET, ethylene and methyl methacrylate copolymers containing epoxy groups and an ionomer have been reported by Howe (WO 91/19767). In all above sources the increase of intrinsic viscosity (IV) through reactive coextrusion is measured but no serious effort of producing and testing test bottles under real life conditions is reported. It is reported that bottles were blow moulded with "good stiffness and smooth surface" but no measurements of their drop resistance were made. Moreover the blend composition contains an ionomer which was not necessary here.

Very few reports are found on the barrier properties of PET blends. Subramanian reports preparation of multiphase dispersions of "barrier polymers" with "no barrier polymers" to produce barrier blends (EP-A-238 197). This patent is mainly involved with polyamide blends without specific mention of PET. No bottles were made or tested. Itou et al. report the production of packaging materials from blends made of PET, polyethylene and ethyl-glycidyl methacrylate copolymer (EP-A-433 976). Permeation was measured on pressed film and bottles. Small bottles were produced and tested regarding compressive strength. However the impact resistance which is critical for the packaging of chemicals was not evaluated for those bottles.

In conclusion, all the publications quoted report the formation of blends using virgin PET of different intrinsic viscosities having, in several cases, toughness, heat resistivity, impact strength, chemical resistivity, weatherproofness and good mouldability. They refer mainly to injection moulding and to tube sheet and film extrusion. Blow moulding is mentioned in some cases but in general terms and without any convincing support. No drop test performance is reported which is critical for practical applications and of course the use of recovered bottle grade PET is not examined. There is no measured report of improvement of rheological properties and melt strength which would lead to extrusion blow mouldable material with processing properties similar to polyethylene (apart from melt viscosity which is insufficient to account for such performance). Furthermore, no report is made on the blow moulding machine configuration, especially regarding the use of advanced high precision temperature control of the type of head used (for instance when using an accumulator type head it is well known that serious sagging problems can be avoided).

The object of this invention is to provide blends of recycled PET, polyolefins, chain extenders, compatibilizers and rubbers which are practically useful as materials for extrusion blow moulding of containers up to 2 l using conventional blow moulding machines of standard PVC or PE/PP configuration. In addition to the well known addivites, the use of nucleation agents or crystallinity reducing agents is found to be especially useful for the production of bottles with superior impact resistance. The recycled PET used in this invention need not be very clean. Any material with above 95% purity is suitable for this application.

A material in order to be suitable for the shaping of containers by extrusion blow moulding must have all the following processing, mechanical and ageing properties:
. Melt strength sufficient to form stable parison using standard extrusion blow moulding machine configuration;
. the containers must be compatible with the contents they are intended to be used for;
. the containers must resist to drop, top loading and deformation;
. the material must be competitive in price.

From a review and duplication of the experiments proposed in the existing literature, it has been realized that the blends were lacking one or more of the above properties and thus, they were not of practical value.

The present invention intends to surmount these drawbacks. This is achieved according to the invention by the packaging material as defined in the independent claims. For further details of this material, reference is made to the dependent claims.

Extrusion blow moulding of standard PET recyclate would be possible only if its modification by blending would create rheological characteristics approaching those of well known blow mouldable materials such as polyethylene, polypropylene, polycarbonate, PVC, polyethylene glycol terephthalate (PETG) or PET extrusion blow moulding (EBM) grade.

In order to be able to evaluate different types of attempted modifications it is necessary to relate processing behaviour with rheological profile. Simple viscosity measurements reported elsewhere do not provide information regarding the elastic and elongational properties of the melt which is the key factor in parison stability. Three types of laboratory techniques can be used: Capillary viscosity on a RHEOGRAPH 2002, melt flow index on MFI apparatus and Dynamic rheological measurements (RDA).

Rheological data from RDA and capillary rheometry are used for the development of a relation between measured properties and end used performance for reference materials. This relation is used as a tool for the prediction of the behaviour of several blending approaches. The data of the ratio of the viscous (G') to the elastic (G'') modulus, called tangens delta obtained at a range of shear rates from 100-500 s⁻¹ as well as viscosities at the same shear rates are combined, evaluated and a theoretical concept is developed accordingly.

An extrusion blow mouldable material should fulfil the following rheological requirements:
. a viscosity range from 250 to 1000 Pa.s
   a tangens delta range from 0.5 to 1.3 at a shear rate of 500 s⁻¹
. a viscosity range from 800 to 2200 Pa.s
   a tangens delta range from 0.7 to 1.7 at a shear rate of 100 s⁻¹

According to that an application window is defined. As it was shown from the results of the EBM trials, this application window is a satisfying simulation.

Recovered bottle grade PET (referred to herein as regrind PET) was used for all the blends prepared. Such grade apart from the lower IV compared to virgin bottle grade PET (which has an IV of about 0.8) is also contaminated with polyolefins (up to 5%) and other foreign matter (up to 0.5%).

The invention will now be explained by way of example.

Blends are produced using regrind PET at a composition of 50-70%, ethylene copolymer containing a glycidyl ester of an a,b-unsaturated carboxylic acid at a comonomer content of more than 5% and up to 30% (called copolymer A) at a composition of 5-15% and PE (HDPE, LDPE, LLDPE, VLDPE, EVA) blow moulding grades at a composition of 20-45% (HDPE = high density PE; LDPE = low density PE; LLDPE = linear low density PE; VLDPE = very low density PE; EVA = ethyl vinyl acetate).

Alternatively the ethylene copolymer A can be substituted totally or at a certain percentage by an ethylene copolymer containing a glycidyl ester of a,b-unsaturated carboxylic acid ester at a comonomer content of more than 5% and a comonomer of an a,b-unsaturated carboxylic acid ester at a content of more than 5% and up to 20% (called copolymer B). In this way one can modify the impact characteristics of the blends, as evidenced by drop test performance of containers, as well as the rigidity and toughness of the final product.

HDPE, preferably of a relatively low density (0.945-0.950 gr/cm³) low melt index (MFI below 0-5 and preferably below 0.2gr/10min) and high impact resistant grade results in high container toughness and rigidity.

The use of LDPE (MFI less than 0.5gr/10min) or LLDPE or VLDPE having a MFI of less than 3.5gr/10min results in a less rigid container but improves the drop test characteristics of the containers.

Ethyl vinyl acetate copolymers (EVA) can also be used provided they have a low MFI (less than 0.5gr/10min). The higher the vinyl acetate content the greater the impact resistance of the container. However a less rigid article is obtained.

The above efficiently dried (moisture level <0.001%) components are reactive extrusion blended using a twin screw extruder for 5-10 minutes at 280°C to 300°C in order to produce blends that can subsequently be processed in conventional blow moulding equipment preferably having standard PE configuration.

Glycidyl ester copolymers can be substituted partially with small bi or tri-functional reactive molecules such as epoxides, anhydrides, isocyanides or amides to enhance chain extension. However the glycidyl ester copolymer percentage can not be reduced below 5% in order to provide compatibility with PE.

Blends produced as described are essentially homogeneous having PET as the main phase with the polyolefinic compounds finely dispersed. The impact resistant properties of such blends are attributed to the reaction bonding of PET and polyolefin phases together with the good impact resistance of the dispersed phases.

Using the above blends containers having a capacity of up to 21 can be produced having as height up to 30cm. Such containers can withstand drop test from 1.8 meters. In order to accomplish this, special care must be taken to avoid excessive material build up especially at the bottom and the neck of the container. This results in lower cooling rates and PET crystallization in these areas with subsequently deteriorated drop test performance, especially when the container is allowed to drop at its bottom.

The above problem can be overcome either through the use of nucleation agents or compounds that reduce PET crystallinity or with the increase of the elastic properties of the dispersed phase as shown below.

Nucleation agents for PET include sodium salts of aromatic carboxylic acids such as sodium o-chlorobenzoate (SOCB), sodium benzoate as well as sodium organic and inorganic compounds (such as sodium nitrite, sodium phenate) and metal hydroxides.

Since sodium compounds are prone to induce PET chain fission their content must not exceed 2% preferably 0.5-1%. Dibenzylidene sorbitol (DBS) at a percentage of 0.5-0.7% can also be used for the effective reduction of crystallite sizes.

Another possibility constitutes the use of components that reduce crystallinity such as silica (treated or untreated). Effective concentrations range between 1-10%. However increased percentage results in lower melt strength therefore suggested percentage is in the range of 2-8%.

The reduction of crystallinity can also be induced through the usage of amorphous polyesters. Polyethylene glycol terephthalate (PETG) can be used at such a percentage of 2-10% (higher levels reduce melt strength).

Another approach for improving the impact resistance necessitates the use of elastomers incorporated in (and therefore compatible with) the polyolefinic phase. In this way the energy that leads to the fracture of the PET phase can be more efficiently absorbed. Any elastomer compatible with the olefinic phase can be used.

The compositions described above may also contain various other additives commonly used in plastics particularly antioxidant, UV stabilizers, pigments etc.

Using the above described blends hollow containers can be extrusion blow moulded or injection blow moulded using conventional machines. However given the fact that regrind PET is used for the preparation of the blends, these containers can not be used for the packaging of products requiring food approved material.

This drawback can be overcome through the use of common two or three layer heads as those used for the production of PE bottles with middle PE regrind layer. Through the use of this technology the regrind layer can be sandwiched between two virgin PE layers in the case of three layer heads or, in the case of 2 layer heads, a virgin PE layer can form the inside of the container. Therefore the material in contact with the contents complies with food standards (see example C below).

It was found that no modification in the design of existing and marketed heads is needed, since blends proposed behave similarly to PE. A bonding layer is not needed since there is enough affinity between the layers. Another advantage of this method is that the parison is extremely easy to blow and that the containers are identical to those produced by PE regarding drop test resistance. Also the volume of the container produced with this method is practically the same as when using PE.

Finally, the PET blends can be processed by injection blow moulding with two additional advantages: (1) Containers larger than 21 can be produced, (2) Containers with more uniform wall thickness could be produced avoiding, in this way, the problem of PET crystallization in thick sections.

Products in organic solvents, like agrochemicals require containers having solvent barrier properties. Similar barrier properties are required in case of gasoline car tanks. The known solutions are expensive (eg. multilayer coex structures, fluorination, use of special polyamide blends, or injection stretch blown PET).

This invention provides a solution with almost half the cost; it was discovered that blends from recycled PET, produced according blend b above have very good solvent barrier properties and are therefore suitable for packaging agrochemicals.

### EXAMPLE A (not within the scope of the annexed claims)

Pellets made of a blend consisting of regrind PET/co-polymer A (85:15) referred to herein as Blend (1) were used to produce 300ml bottles having a total exposed area of 250 cm² and average wall thickness 0.55 mm. Similar bottles were made with HDPE and also extrusion blow moulding grade PET. The bottles were filled with 200gr xylene or white spirit and stored at 25°C and 40°C for 150 days.

Measurements are presented in the following table in comparison with PET (high melt viscosity) (PET(HMV)) and high density polyethylene (HDPE) materials.

| Time (days) | Xylene wt. loss rate (g/day) | | |
|---|---|---|---|
| | PET(HMV) | BLEND 1 | HDPE |
| at 25°C | | | |
| 2 | 0.028 | 0.030 | 1.122 |
| 10 | 0.020 | 0.020 | 0.600 |
| 125 | 0.013 | 0.010 | 0.446 |
| 150 | 0.012 | 0.010 | 0.443 |

| at 40°C | | | |
|---|---|---|---|
| 10 | 0.04 | 0.04 | - |
| 25 | 0.04 | 0.06 | - |
| 40 | 0.05 | 0.08 | - |
| 80 | 0.05 | 0.10 | - |
| 110 | 0.05 | 0.10 | - |
| 150 | 0.05 | 0.11 | - |

From these measurements the average weight loss at 25°C can be calculated. After the stabilization of weight loss rate, which is taking place after the first month, the weight loss per month is:

| bottle material | monthly weight loss at 25°C | monthly weight loss at 40°C |
|---|---|---|
| PET (HMV) | 0.35 g | 1.6 g |
| BLEND 1 | 0.30 g | 3.0 g |
| HDPE | 14.2 g | - |

The same bottles were filled with white spirit. The results are shown in the following table.

| Time (days) | white spirit wt.loss rate (g/day) | | |
|---|---|---|---|
| | PET (HMV) | BLEND 1 | HDPE |
| at 25°C | | | |
| 2 | 0.023 | 0.022 | 1.145 |
| 10 | 0.010 | 0.010 | 0.116 |
| 125 | 0.005 | 0.004 | 0.089 |
| 150 | 0.005 | 0.004 | 0.092 |

| at 40°C | | | |
|---|---|---|---|
| 10 | 0.009 | 0.014 | - |
| 25 | 0.012 | 0.016 | - |
| 40 | 0.013 | 0.016 | - |
| 80 | 0.013 | 0.016 | - |
| 110 | 0.012 | 0.016 | - |
| 150 | 0.012 | 0.018 | - |

Therefore the white spirit loss per month is:

| bottle material | monthly weight loss at 25°C | monthly weight loss at 40°C |
|---|---|---|
| PET (HMV) | 0.15 g | 0.36 g |
| BLEND 1 | 0.12 g | 0.55 g |
| HDPE | 2.8 g | - |

### EXAMPLE B

Pellets made by blending of regrind PET/copolymer B/HDPE (85:15:20) called blend 2 and regrind PET/copolymer B/LDPE (85:15:20), called blend 3, were used to produce 1.31 bottles having a total exposed area of 700 cm² and average wall thickness 0.7mm.

For comparison reasons, similar bottles were made of HDPE and also of three layer COEX PA/Bonding layer/HDPE). Bottles were filled with 1000g xylene or white spirit.

The measurements are presented in the following tables:

| Time (days) | Xylene wt. loss rate (g/day) | | |
|---|---|---|---|
| | Blend 3 | Blend 2 | COEX HDPE |
| at 25°C | | | |
| 8 | 0.015 | 0.013 | 0.001 0.650 |
| 25 | 0.008 | 0.003 | 0.001 0.500 |
| 40 | 0.006 | 0.002 | 0.001 0.450 |
| 80 | 0.005 | 0.002 | 0.001 0.450 |

| at 40°C | | | |
|---|---|---|---|
| 25 | 0.009 | 0.010 | 0.002 - |
| 35 | 0.012 | 0.012 | 0.003 - |
| 55 | 0.077 | 0.015 | 0.005 - |

| Time (days) | White spirit wt. loss rate (g/day) | | | |
|---|---|---|---|---|
| | Blend 2 | Blend 3 | COEX | HDPE |
| at 25°C | | | | |
| 10 | 0.000 | 0.000 | 0.000 | 0.100 |
| 45 | 0.001 | 0.001 | 0.000 | 0.472 |

| at 40°C | | | | |
|---|---|---|---|---|
| 25 | 0.008 | 0.007 | 0.001 | 0.920 |
| 35 | 0.007 | 0.008 | 0.001 | 1.100 |
| 65 | 0.008 | 0.008 | 0.001 | 1.180 |

From the above measurements the average monthly weight loss is calculated at 25°C and 40°C.

| material | monthly weight loss of xylene at 25°C | monthly weight loss of white spirit at 25°C | monthly weight loss of xylene at 40°C | monthly weight loss of white spirit at 40°C |
|---|---|---|---|---|
| Blend 2 | < 0.1 g | < 0.1 g | 0.45 g | 0.24 g |
| Blend 3 | 0.15g | < 0.1 g | 2.3 g | 0.24 g |
| COEX | < 0.1 g | < 0.1 g | 0.15 g | < 0.1 g |
| HDPE | 70 g | 14 g | - | 36 g |

It is clearly understood that blends made under this invention are suitable for making containers for organic solvents and organic solvent base products (eg. containers for agrochemicals, gasoline tanks, etc.)

### EXAMPLE C

Another embodiment of this invention is the use of two, three or four layer coextrusion technology to reinforce those PET blends which otherwise would be unsuitable for monolayer extrusion blow moulding.

The main layer in the coextrusion structures is a PET blend with insufficient melt strength and/or mechanical properties. The other layer(s) are from extrusion blow grade polyolefin, alone or blended with elastomers and/or compatibilizers.

The secondary layer(s) work as melt reinforcements of the parison and as mechanical wall reinforcements in the final container.

In the present example pellets of previous blends were coextruded with two layers of HDPE (MFI 0.1) with or without the use of an adhesive layer.

Such multilayer structures could be used for food packaging provided that the contact layer is made of virgin polyolefin.

Blends from recycled PET may be produced which fulfil all the prerequisites:

These blends have been made in industrial scale and the upscaling of reactive extrusion has been smoothed out.

Bottles of various shapes and sizes have been made in pilot quantities and tested empty and filled with standard commercial liquids such as motor oil, agrochemicals, and housecleaning chemicals.

The ageing properties of the bottles and their recyclability have been tested.

The two and three layer coextrusion blow moulding technique has been used to increase potential applications and to correct processing and mechanical inadequacies when producing containers up to 51 from several PET blends.

Containers with sufficient barrier and mechanical properties have been made to be suitable for packaging agrochemicals and other solvent containing products.

## Claims

1. A packaging material utilizing polyethylene terephthalate (PET) as main constituent, suitable for the production of containers through reaction extrusion blending, characterized in that the PET consists of post consumer PET regrind at a composition of between 50 and 70% by weight, and that the material further includes an ethylene copolymer at a rate of 5 to 30% by weight and between 15 and 45% of a polyolefin blow moulding grade selected from HDPE, LDPE, LLDPE, VLDPE or EVA polymer.

2. A packaging material according to claim 1, characterized in that the ethylene copolymer contains a glycidyl ester of an a,b-unsaturated carboxylic acid at a monomer content of between 3 and 30% (copolymer A).

3. A packaging material according to claim 1, characterized in that the ethylene copolymer contains a glycidyl ester of an a,b-unsaturated carboxylic acid ester at a monomer content of more than 5% and a co-monomer of an a,b-unsaturated carboxylic acid ester at a co-monomer content between 5 and 20% (copolymer B).

4. A packaging material according to any one of claims 2 to 3, characterized in that the ethylene copolymer is substituted in part by bi- or trifunctional molecules bearing epoxy, anhydride, isocyanate and amine reactive groups, provided that the glycidyl ester polymer content remains above 3%.

5. A packaging material as in claim 3 or 4, characterized in that it contains PET nucleation agents 0,5-2 parts by weight in 100 parts of blend.

6. A packaging material as in claim 3 or 4, characterized in that it contains crystallinity reducers 1-10 parts by weight in 100 parts of blend.

7. A packaging material as in claim 3 or 4, characterized in that it contains polyethylene glycol terephthalate (PETG) at 2-10 parts by weight in 100 parts of blend.

8. A packaging material as in claim 3 or 4, characterized in that it contains 5-20 parts by weight of a thermoplastic elastomer compatible with the polyolefinic phase in 100 parts of blend.

## Patentansprüche

1. Verpackungsmaterial unter Verwendung von Polyäthylen-Terephtalat (PET) als Hauptbestandteil, das für die Herstellung von Behältern durch reaktive Extrusion einer Mischung geeignet ist, dadurch gekennzeichnet, daß das PET aus Recycling-Abfall-PET mit einem Mischungsanteil zwischen 50 und 70 Gew% besteht und daß das Material weiter zu zwischen 5 und 30 Gew% ein Äthylen-Kopolymer und zu zwischen 15% und 45% ein für Blasguß geeignetes Polyolefin enthält, das aus der Gruppe ausgewählt wird, die HDPE-, LDPE-, LLDPE-, VLDPE- und EVA-Polymere enthält.

2. Verpackungsmaterial nach Anspruch 1, dadurch gekennzeichnet, daß das Äthylen-Kopolymer ein Glyzidylester einer a,b-ungesättigten Carboxylsäure mit einem Monomeranteil von zwischen 3% und 30% enthält (Kopolymer A) .

3. Verpackungsmaterial nach Anspruch 1, dadurch gekennzeichnet, daß das Äthylen-Kopolymer einen Glyzidylester eines a,b-ungesättigten Carboxylsäure-Esters mit einem Monomeranteil über 5% und ein Komonomer eines a,b-ungesättigten Carboxylsäure-Esters mit einem Komonomeranteil zwischen 5% und 20% enthält (Kopolymer B).

4. Verpackungsmaterial nach einem beliebigen der Ansprüche 2 und 3, dadurch gekennzeichnet, daß das Äthylen-Kopolymer teilweise durch bi- oder trifunktionale Moleküle substituiert ist, die Epoxi-, Anhydrid-, Isozyanat- und Aminreaktionsgruppen tragen, wobei der Anteil von Glyzidylesterpolymer über 3% bleibt.

5. Verpackungsmaterial nach Anspruch 3 oder 4, dadurch gekennzeichnet, daß es 0,5 bis 2 Gewichtsteile an Keimbildungsmitteln für PET in 100 Teilen der Mischung enthält.

6. Verpackungsmaterial nach Anspruch 3 oder 4, dadurch gekennzeichnet, daß es 1 bis 10 Gewichtsteile eines Kristallbildungsreduzierers in 100 Teilen der Mischung enthält.

7. Verpackungsmaterial nach Anspruch 3 oder 4, dadurch gekennzeichnet, daß es 5 bis 20 Gewichtsteile von Polyäthylenglykol-Terephtalat (PETG) in 100 Teilen der Mischung enthält.

8. Verpackungsmaterial nach Anspruch 3 oder 4, dadurch gekennzeichnet, daß es 5 bis 20 Gewichtsteile eines thermoplastischen Elastomers, das mit der Polyolefinphase kompatibel ist, in 100 Teilen der Mischung enthält.

## Revendications

1. Matériau de conditionnement utilisant comme constituant principal du polyéthylène téréphtalate (PETP) et adapté à la production de récipients par réaction et extrusion d'un mélange, caractérisé en ce que le PETP consiste entre 50 et 70% en poids de PETP recyclé et que le matériau comporte en outre entre 5 et 30% en poids d'un copolymère d'éthylène et entre 15 et 45% de polyoléfine adapté au moulage par soufflage et choisi parmi les polymères HDPE, LDPE, LLDPE, VLDPE, EVA.

2. Matériau de conditionnement selon la revendication 1, caractérisé en ce que le copolymère d'éthylène contient un ester glycidylique d'un acide carboxylique a,b insaturé avec une teneur en monomère entre 3 et 30% (copolymère A).

3. Matériau de conditionnement selon la revendication 1, caractérisé en ce que le copolymère d'éthylène contient un ester glycidylique d'un acide carboxylique a,b insaturé avec une teneur en monomère supérieure à 5% et un comonomère d'un ester d'acide carboxylique a,b insaturé avec une teneur en monomère entre 5 et 20% (copolymère B).

4. Matériau de conditionnement selon l'une quelconque des revendication 2 et 3, caractérisé en ce que le copolymère d'éthylène est substitué en partie par des molécules biou trifonctionelles portant des groupes réactifs epoxy, anhydride, isocyanates et amines, pourvu que la teneur en polymère d'ester glycidylique reste supérieure à 3%.

5. Matériau de conditionnement selon l'une des revendications 3 et 4, caractérisé en ce qu'il comporte 0,5 à 2 parties en poids d'un agent de nucléation PETP dans 100 parties du mélange.

6. Matériau de conditionnement selon la revendication 3 ou 4, caractérisé en ce qu'il comporte des agents réducteurs de la cristallinité à raison de 1 à 10 parties en poids dans 100 parties du mélange.

7. Matériau de conditionnement selon la revendication 3 ou 4, caractérisé en ce qu'il comporte du polyéthyléne glycol téréphtalate (PETG) à raison de 2 à 10 parties en poids dans 100 parties du mélange.

8. Matériau de conditionnement selon la revendication 3 ou 4, caractérisé en ce qu'il comporte un élastomère thermoplastique compatible avec la phase polyoléfinique à raison de 5 à 20 parties en poids dans 100 parties du mélange.
